# EUROPÄISCHE PATENTSCHRIFT

(11) **EP 3 077 748 B1**
(45) Veröffentlichungstag und Bekanntmachung des Hinweises auf die Patenterteilung: **28.08.2019**
(21) Anmeldenummer: 14808952.7
(22) Anmeldetag: 03.12.2014
(51) Int. Cl.: B65G 45/00, F26B 5/06, B65G 47/53, B65G 47/66, F26B 25/00, B65G 47/08

(54) **ENTLADEVORRICHTUNG MIT VAKUUMANSAUGUNG**
UNLOADING DEVICE FEATURING VACUUM SUCTION
DISPOSITIF DE DÉCHARGEMENT AVEC ASPIRATION PAR LE VIDE

(30) Priorität: 05.12.2013 DE 102013225047
(43) Veröffentlichungstag der Anmeldung: 12.10.2016
(73) Patentinhaber: Strauch, Harald, 50181 Bedburg (DE)
(72) Erfinder: STRAUCH, Harald, 50181 Bedburg (DE); SELCH, Johannes, 50354 Hürth (DE); STEINKELLNER, Daniel, 50354 Hürth (DE); KIRFEL, Rolf, 53925 Kall (DE)
(74) Vertreter: Kudla, Christof
(86) Internationale Anmeldenummer: PCT/EP2014/076456
(87) Internationale Veröffentlichungsnummer: WO 2015/082563

(56) Entgegenhaltungen:
- EP-A2- 0 237 149
- EP-A2- 2 112 447
- US-A1- 2006 070 927
- US-A1- 2012 217 136

## Beschreibung

Die Erfindung betrifft eine Entladevorrichtung für eine Produktbehandlungseinrichtung. Eine derartige Vorrichtung ist aus Dokument EP 2112447 A2 bekannt.

Eine Produktbehandlungseinrichtung kann ein Gefriertrockner zum Gefriertrocknen von Substanzen sein, die in Produktbehältern angeordnet sind. Eine Produktbehandlungseinrichtung weist hierzu typischerweise eine Behandlungskammer auf, in der die zu behandelnden Produkte auf Stellflächen angeordnet sind. Während der Behandlung befinden sich die Produkte auf der Stellfläche innerhalb der verschlossenen Behandlungskammer. Nach der Behandlung werden die Produkte über eine Transferplatte einer Fördervorrichtung zugeführt.

Dabei werden die Produkte in mehreren hintereinander angeordneten Reihen entlang einer Transferrichtung über die Transferplatte geschoben. Die Produkte beziehungsweise Produktbehälter benachbarter Reihen sind meist versetzt zueinander angeordnet, damit möglichst viele Produktbehälter/Produkte auf die Transferplatte passen. Jede Produktreihe erstreckt sich über die gesamte Breite der Transferplatte.

Die Fördervorrichtung fördert die jeweils vorderste Reihe von Produkten beziehungsweise Produktbehältern entlang einer quer zu der Transferrichtung angeordneten Förderrichtung. Bei der Fördervorrichtung kann es sich beispielsweise um ein Förderband handeln.

Bei der Überführung der Produkte von der Transferplatte auf die Fördervorrichtung besteht eine Schwierigkeit darin, nur die Produktbehälter der vordersten, unmittelbar an die Fördervorrichtung angrenzende Produktreihe zu fördern. Insbesondere aufgrund der versetzten Anordnung der Produkte benachbarter Reihen und aufgrund der Reibwirkung zwischen benachbarten Produkten werden oftmals Produkte einer nachfolgenden Reihe mitgerissen. Dies führt dazu, dass die Produkte ungeordnet, das heißt in undefinierter Anordnung, auf der Fördervorrichtung stehen. Eine Zuordnung eines Produkts auf der Fördervorrichtung zu dessen vorheriger Position auf der Transferplatte ist dadurch nachträglich erschwert.

Der Erfindung liegt die Aufgabe zugrunde, dass Überführen der Produkte von der Transferplatte auf die Fördervorrichtung zu verbessern.

Die erfindungsgemäße Entladevorrichtung ist definiert durch Anspruch 1. Das erfindungsgemäße Entladeverfahren ist definiert durch Anspruch 11. Erfindungsgemäß ist in dem Übergangsbereich zwischen der Transferplatte und der Fördervorrichtung eine Saugfläche mit Ansaugöffnungen vorgesehen, durch welche die Produkte auf die Saugfläche gesogen werden. Durch das Ansaugen der Produkte auf die Saugfläche ist vermieden, dass Produkte einer nachfolgenden Reihe von der jeweils vordersten, auf die Fördervorrichtung überführten Reihe mitgerissen werden. Dabei erfolgt die Ansaugung der Produkte an die Saugfläche mit einer solchen Kraft, dass ein Vorschieben der Produkte über die Saugfläche in Richtung der Fördervorrichtung während der Ansaugung noch möglich ist. Beim Vorschieben der Produkte über die Saugfläche wird dann nur die jeweils vorderste Produktreihe von der Fördervorrichtung mitgeführt und quer zu der Transferrichtung gefördert.

Ein wesentlicher Vorteil besteht nicht nur darin, dass nur die Produkte der vordersten Reihe auf die Fördervorrichtung gelangen. Ein weiterer Vorteil ist, dass eine Produktreihe vollständig und geordnet von der Transferplatte auf die Fördervorrichtung überführt wird. Dadurch kann anhand der Position eines Produkts innerhalb einer geförderten Produktreihe dessen vorherige Position auf der Transferplatte nachvollzogen werden. Dies ist insbesondere bei einer automatisierten stichprobenartigen Überprüfung der Produktqualität von Bedeutung.

Ein weiterer Vorteil ist darin zu sehen, dass die Fördervorrichtung mit höheren Fördergeschwindigkeiten betrieben werden kann, ohne Produkte aus einer nachfolgenden Reihe mitzureißen.

Die Ansaugung der Produkte an die Saugfläche erfolgt durch die Ansaugöffnungen von unten, dass heißt der Boden der Produkte beziehungsweise Produktbehälter wird angesaugt. Oberhalb der Produkte sind dabei keine Teile erforderlich. Dies ist im Bereich der pharmazeutischen Gefriertrocknung zur Vermeidung von Verunreinigungen von Bedeutung.

Unter Produkten können Produktbehälter verstanden werden, die das behandelte Produkt enthalten. Im Bereich der Gefriertrocknung sind dies Produktbehälter, Karpullen oder ähnliche Behältnisse, wie zum Beispiel für die Gefriertrocknung geeignete Spritzenzylinder, die das gefriergetrocknete Produkt enthalten.

Die Produktreihen mit nebeneinander angeordneten Produkten erstrecken sich über die gesamte Breite der Transferplatte und über die gesamte Breite der Saugfläche. Der Vorschub der Produkte entlang der Transferplatte und der Saugfläche kann beispielsweise mit einem Schieber von hinten gegen die jeweils hinterste Produktreihe erfolgen.

Die Ansaugöffnungen sind mindestens in zwei in Transferrichtung hintereinander angeordneten Reihen angeordnet. Jede Reihe von Saugöffnungen erstreckt sich dabei quer zu der Transferrichtung und parallel zu der Förderrichtung. Dabei sind die Abstände und Durchmesser der Ansaugöffnungen derart ausgebildet, dass jedem Produkt beziehungsweise Produktbehälter mindestens zwei und vorzugsweise mindestens drei Ansaugöffnungen zugeordnet sind. Dadurch wird also jedes vollständig auf der Saugfläche aufliegende Produkt von mindestens zwei und vorzugsweise mindestens einer Ansaugöffnung angesogen.

Insbesondere kann der Abstand unmittelbar benachbarter Ansaugöffnungen etwa 1 mm bis 5 mm betragen, während der Durchmesser der Ansaugöffnungen im Bereich zwischen 3 mm und 8 mm liegen kann. Die Summe aus dem doppelten Durchmesser einer Ansaugöffnung und dem Abstand benachbarter Ansaugöffnungen sollte kleiner sein als der Durchmesser der angesaugten Fläche (Bodenfläche) des Produkts.

Die vorderste, an die Fördervorrichtung angrenzende Reihe der Ansaugöffnungen sollte in einem Abstand von etwa 5 - 8 mm und vorzugsweise circa 6,5 mm zu dem Rand der Fördervorrichtung beziehungsweise des Förderbandes angeordnet sein. Die Förderebene der Fördervorrichtung kann auf gleicher Höhe wie die Saugfläche oder vorzugsweise geringfügig unterhalb der Saugfläche angeordnet sein. Besonders vorteilhaft ist die Förderebene in einem Bereich zwischen 0,1 und 0,25 mm unterhalb der Saugfläche angeordnet.

Die Saugfläche ist vorteilhafterweise die Oberfläche einer als auswechselbares Teil ausgebildeten Saugvorrichtung mit einem inneren Saugraum, der mit jeder der Ansaugöffnungen in Saugverbindung steht. Der Saugraum ist mit mindestens einem Vakuumanschluss zum Anschließen einer Vakuumpumpe zum Evakuieren des Saugraumes versehen. Vorteilhafterweise sind mindestens zwei Vakuumanschlüsse vorgesehen.

Die Saugvorrichtung ist vorzugsweise mit auf einander gegenüberliegenden Seiten des Saugraumes angeordneten Reinigungsöffnungen versehen, die zum Reinigen des Saugraumes geöffnet werden können. Im Bereich der Gefriertrocknung und insbesondere auf dem Gebiet der pharmazeutischen Gefriertrocknung ist eine regelmäßige Reinigung und ein Autoklavieren der verwendeten Teile von besonderer Bedeutung. Die Reinigungsöffnungen sind verschließbar. Zum Reinigen oder Autoklavieren können die Reinigungsöffnungen geöffnet werden, um beispielsweise mit Druckluft den Saugraum und die Ansaugöffnungen freizublasen.

Nach einer Weiterbildung der Erfindung ist die Transferplatte mit einer Hubvorrichtung versehen, um die Transferplatte während der Reinigung der Saugfläche und/oder des Saugraumes in eine Reinigungsposition zu bewegen. In der Reinigungsposition befindet sich die Transferplatte vorzugsweise oberhalb der Ebene der Saugfläche. In der Reinigungsposition sind die Saugfläche und/oder der Saugraum erreichbar. Die Hubvorrichtung sollte sich vorteilhafterweise unterhalb der Transferplatte befinden, um eine Gefahr der Verunreinigung von Produkten auf der Transferplatte durch die Hubvorrichtung zu vermeiden.

Das Fördern der Produkte entlang der Transferrichtung auf der Transferplatte und der Saugfläche und entlang der Förderrichtung auf der Fördervorrichtung kann abwechselnd erfolgen. Das bedeutet, dass während des Vorschubs entlang der Transferrichtung keine Förderung mit der Fördervorrichtung erfolgt. Während der Förderung entlang der Förderrichtung erfolgt dann kein Vorschub entlang der Transferrichtung. Die Ansaugung der Produkte an die Saugfläche erfolgt dabei jedoch kontinuierlich, das heißt sowohl während der Förderung entlang der Förderrichtung als auch während des Vorschubs entlang der Transferrichtung.

Die Saugvorrichtung ist vorteilhafterweise auswechselbar ausgebildet. Das heißt, dass die Saugvorrichtung samt der Saugfläche vollständig entnommen werden kann, um diese zu reinigen, oder gegen eine andere Saugvorrichtung auszutauschen. Ein Nachrüsten einer bestehenden Entladevorrichtung mit der erfindungsgemäßen Saugvorrichtung ist dadurch ebenfalls ermöglicht.

Vorzugsweise kann die Saugfläche gegen eine Saugfläche mit anderen Durchmessern, Anordnungen und/oder Abständen der Ansaugöffnungen ausgetauscht werden. Dies ist dann von Vorteil, wenn mit derselben Entladevorrichtung Produkte verschiedener Größen bewegt werden sollen.

Im Folgenden wird anhand der Figuren ein Ausführungsbeispiel der Erfindung näher erläutert. Es zeigen:

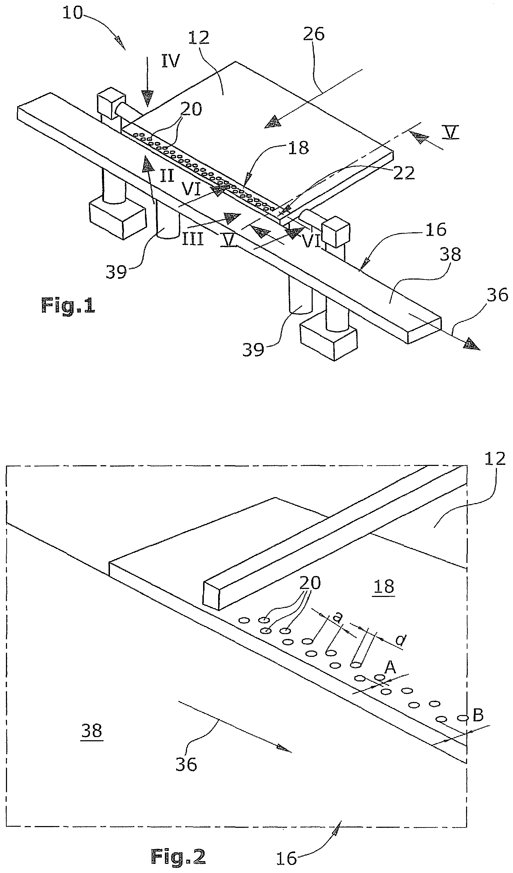

- Figur 1: eine perspektivische Ansicht,
- Figur 2: ein Detail gemäß dem Pfeil II in Figur 1,
- Figur 3: eine Detailansicht aus Richtung des Pfeils III in Figur 1 in beladenen Zustand,
- Figur 4: eine schematische Ansicht aus Richtung des Pfeils IV in Figur 1,
- Figur 5: einen Schnitt entlang der Linie V-V in Figur 1, und
- Figur 6: einen Schnitt entlang der Linie VI-VI in Figur 1.

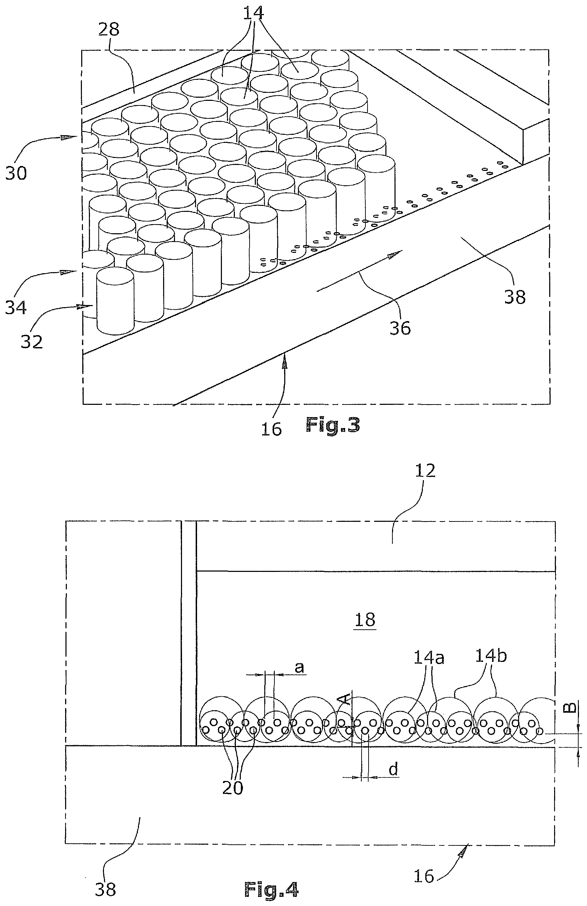

Die Transferplatte 12 der Entladevorrichtung 10 ist auf herkömmliche Art, wie beispielsweise in DE 10 2008 020 705 A1 beschrieben, ausgebildet. Die in Figur 3 dargestellten Produkte in Form von Produktbehältern werden entlang der Transferrichtung 26 gefördert, in dem ein Schieber 28 die jeweils hinterste Produktreihe 30 anschiebt. Dadurch wird die vorderste Produktreihe 32 über die Saugfläche 18 auf das Förderband 38 der Fördervorrichtung 16 geschoben. Die nachfolgende Produktreihe 34, die unmittelbar hinter der vordersten Reihe 32 angeordnet ist, wird über die Ansaugöffnungen 20 an die Saugfläche 18 gesogen. Die Ansaugung erfolgt von unten gegen die Unterseite der Produktbehälter/Produkte 14. Die Förderung der jeweils vordersten Produktreihe 32 erfolgt mit der Fördervorrichtung 16 entlang einer quer zu der Transferrichtung 26 angeordneten Förderrichtung 36.

Die Ansaugöffnungen 20 sind in zwei hintereinander angeordneten Reihen an der Saugfläche 18 angeordnet. Die Reihen der Ansaugöffnungen 20 sind parallel zu der Förderrichtung 36 und quer zu der Transferrichtung 26 angeordnet und erstrecken sich jeweils über die gesamte Breite der Saugfläche 18 und der Transferplatte 12. Die Ansaugöffnungen 20 benachbarter Reihen sind versetzt zueinander angeordnet. Der Durchmesser d jeder Ansaugöffnung 20 beträgt etwa 3 mm. Der Abstand a zwischen benachbarten Ansaugöffnungen 20 einer Reihe beträgt etwa 5 mm. Der Abstand a erstreckt sich von dem Rand der einen Ansaugöffnung zu dem Rand der benachbarten Ansaugöffnung 20. Die beiden Reihen der Ansaugöffnungen sind in einem Abstand A von circa 1,1 mm zueinander angeordnet. Der Abstand A erstreckt sich in Richtung der Transferrichtung 26 zwischen den Rändern der Ansaugöffnungen 20. Der Abstand B zwischen den Rändern der vordersten Reihe von Ansaugöffnungen 20 zu dem Rand der Fördervorrichtung 16 beträgt etwa 6,5 mm.

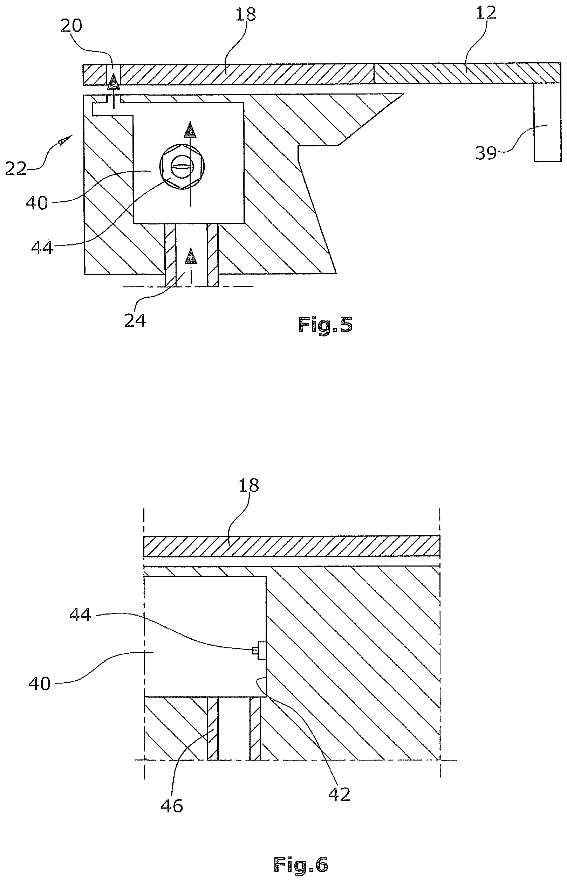

Die Saugfläche 18 mit den Ansaugöffnungen 20 ist die Oberfläche einer Saugvorrichtung 22 in Form eines Balkens mit einem inneren Saugraum 40, der mit den Ansaugöffnungen 20 verbunden ist. An der der Saugfläche 18 gegenüberliegenden Unterseite weist die Saugvorrichtung 22 Vakuumanschlüsse 24 auf, die mit einer Vakuumpumpe verbunden werden. Die Vakuumpumpe erzeugt dann in dem Saugraum 40 ein Vakuum, um die Produkte 14 über die Ansaugöffnungen 20 an die Saugfläche 18 zu saugen. Der Saugraum 40 mit den Vakuumanschlüssen 24 ist in dem Schnitt gemäß Figur 5 dargestellt. Vorzugsweise ist die Saugvorrichtung mit drei Vakuumanschlüssen 24 versehen, die in gleichmäßigen Abständen über die gesamte Länge der Saugvorrichtung 22 in Förderrichtung 36 verteilt angeordnet sind. Zwei Vakuumanschlüsse 24 sind dabei an einander gegenüberliegenden stirnseitigen Enden der Saugvorrichtung 22 mit der Unterseite des Saugraumes 40 verbunden, wobei der dritte Vakuumanschluss 24 in der Mitte der Saugvorrichtung 22 mit der Unterseite des Saugraumes 40 verbunden ist.

Zur Reinigung des Saugraumes 40 und der Saugfläche 18 sind an den stirnseitigen, einander gegenüberliegenden Enden 42 des Saugraumes 40 Reinigungsdüsen 44 vorgesehen. An jedem stirnseitigen Ende 42 ist dabei eine Reinigungsdüse 44 vorgesehen, die in den Saugraum 40 hinein gerichtet ist. Im Bereich der stirnseitigen Enden 42 des Saugraumes 40 ist ferner jeweils ein Ablauf 46 in der Bodenfläche des Saugraumes 40 vorgesehen. Durch den Ablauf 46 kann das Reinigungsmedium, welches von den Reinigungsdüsen 44 eingespritzt worden ist, ablaufen.

In Figur 4 sind schematisch verschieden große Produkte 14a, 14b dargestellt. Die Produkte 14a weisen einen geringeren Durchmesser als die Produkte 14b auf. Während jedem der kleineren Produkte 14a mindestens drei Ansaugöffnungen vollständig zugeordnet sind, decken die größeren Produkte 14b jeweils mindestens fünf Ansaugöffnungen 20 vollständig ab. Der Schieber 28 schiebt die Reihen 30, 32, 34 der Produkte 14 so weit vor, bis die Produkte 14 der vordersten Produktreihe 32 etwa zu zwei Dritteln ihres Durchmessers auf dem Förderband der Fördervorrichtung 16 aufliegen. Im Bereich des hinteren Randes der Produkte 14 dieser vordersten Reihe 32 erfolgt dann gerade eben noch eine geringe Ansaugung über die vorderste Reihe der Ansaugöffnungen 20. Die nachfolgende zweite Produktreihe 34 wird dann stärker angesaugt als die vorderste Reihe 32, weil die nachfolgende Reihe 34 eine größere Abdeckung mit den Ansaugöffnungen 20, wie in Figur 3 dargestellt, erfährt.

Der Vorschub entlang der Transferrichtung mit dem Schieber 28 wird dann gestoppt, während die Vakuumansaugung über die Ansaugöffnungen 20 kontinuierlich weiter erfolgt. Anschließend wird das Förderband der Fördervorrichtung 16 in Gang gesetzt, wobei die vorderste Reihe 32 der Produkte 14 von der Fördervorrichtung 16 mitgenommen und entlang der Förderrichtung 36 gefördert wird. Dadurch, dass die zweite Reihe 34 nun maximal angesaugt wird, wird aus dieser Reihe 34 kein Produkt 14 von der vordersten Reihe 32 mitgerissen.

Sobald das in Förderrichtung 36 hinterste Produkt 14 der Reihe 32 aus dem Bereich der Transferplatte 12 und der Saugfläche 18 gefördert worden ist, wird die Fördervorrichtung 16 gestoppt und die nachfolgende, nunmehr vorderste Produktreihe wird von dem Schieber 28 auf die Fördervorrichtung 16 geschoben und das Verfahren wiederholt.

Zum Reinigen des Saugraumes 40 und der Saugfläche 18 wird die Transferplatte 12 von den Hubzylindern der Hubvorrichtung 39 um etwa 100 mm vertikal nach oben gefahren. Dadurch ist vermieden, dass während des Reinigungsvorgangs durch die Ansaugöffnungen 20 nach oben austretendes Reinigungsmedium auf der Transferplatte 12 angeordnete Produkte 14 verunreinigen kann. Der Vorteil ist also darin zu sehen, dass die Reinigung erfolgen kann, während Produkte 14 auf der Transferplatte 12 stehen.

## Patentansprüche

1. Entladevorrichtung (10) für eine Produktbehandlungseinrichtung, mit einer Transferplatte (12) zum Transferieren mehrerer hintereinander angeordneter Reihen mit jeweils mehreren behandelten Produkten (14) auf eine Fördervorrichtung (16),
**gekennzeichnet durch**
eine zwischen der Transferplatte (12) und der Fördervorrichtung (16) angeordnete Saugfläche (18) mit Ansaugöffnungen (20) zum Ansaugen der Produkte an die Saugfläche (18), wobei die Förderrichtungen für die Produkte (14) auf der Transferplatte (12) und der Fördervorrichtung (16) quer zueinander angeordnet sind.

2. Entladevorrichtung (10) nach Anspruch 1, **dadurch gekennzeichnet, dass** die Ansaugöffnungen im Wesentlichen über die gesamte Breite der Saugfläche (18) und der Transferplatte (12) im Bereich des an die Fördervorrichtung (16) angrenzenden Randes der Saugfläche (18) angeordnet sind.

3. Entladevorrichtung (10) nach einem der vorhergehenden Ansprüche, **dadurch gekennzeichnet, dass** mindestens zwei Reihen von versetzt zueinander angeordneten Ansaugöffnungen (20) vorgesehen sind.

4. Entladevorrichtung (10) nach einem der vorhergehenden Ansprüche, **dadurch gekennzeichnet, dass** die Förderebene der Fördervorrichtung (16) auf gleicher Höhe oder bis zu circa 0,25 mm unterhalb der Saugfläche (18) angeordnet ist.

5. Entladevorrichtung (10) nach einem der vorhergehenden Ansprüche, **dadurch gekennzeichnet, dass** der Abstand zwischen benachbarten Ansaugöffnungen (20) derselben Reihe etwa 1 mm bis 5 mm beträgt.

6. Entladevorrichtung (10) nach einem der vorhergehenden Ansprüche, **dadurch gekennzeichnet, dass** der Durchmesser d der Ansaugöffnungen (20) ungefähr 3 mm bis 8 mm beträgt.

7. Entladevorrichtung (10) nach einem der vorhergehenden Ansprüche, **dadurch gekennzeichnet, dass** die Saugfläche (18) die Oberfläche einer als auswechselbares Teil ausgebildeten Saugvorrichtung (22) ist.

8. Entladevorrichtung (10) nach Anspruch 7, **dadurch gekennzeichnet, dass** die Saugvorrichtung einen mit allen Saugöffnungen (20) verbundenen Saugraum (40) aufweist, der über Vakuumanschlüsse (24) mit einer Vakuumpumpe verbindbar ist.

9. Entladevorrichtung (10) nach einem der vorhergehenden Ansprüche, **dadurch gekennzeichnet, dass** die Transferplatte (12) eine Hubvorrichtung (39) zum Bewegen der Transferplatte in eine Reinigungsposition zum Reinigen der Saugfläche (18) und/oder des Saugraumes (40) aufweist.

10. Entladevorrichtung (10) nach dem vorhergehenden Anspruch, **dadurch gekennzeichnet, dass** die Hubvorrichtung (39) mindestens einen unterhalb der Transferplatte (12) angeordneten Hubzylinder aufweist.

11. Verfahren zum Befördern von Produkten (14) mit einer Entladevorrichtung (10) nach einem der vorhergehenden Ansprüche, **dadurch gekennzeichnet, dass**
a) die Produkte (14) in mehreren hintereinander angeordneten Reihen in einer Transferrichtung entlang der Transferplatte (12) gefördert werden, wobei Produkte (14) benachbarter Reihen versetzt zueinander angeordnet sind.
b) die Produkte (14) entlang der Transferrichtung über die Saugfläche (18) der Fördervorrichtung (16) zugeführt werden, die die Produkte (14) in einer Förderrichtung quer zu der Transferrichtung fördert und
c) die Produkte (14) mindestens einer ganzen Produktreihe mit den Ansaugöffnungen (20) an die Saugfläche (18) gesaugt werden.

12. Verfahren nach Anspruch 11, **dadurch gekennzeichnet, dass** die Ansaugung gemäß Schritt c) derart erfolgt, dass jeweils nur die Produkte (14) der vordersten Produktreihe (32) von der Fördervorrichtung (16) mitgenommen werden, während die Produkte der nachfolgenden Reihe (34) durch das Ansaugen auf der Saugfläche (18) gehalten werden.

13. Verfahren nach Anspruch 11 or 12, **dadurch gekennzeichnet, dass** der Vorschub der Produktreihen (30, 32, 34) entlang der Förderrichtung und das Fördern der jeweils vordersten Produktreihe (32) entlang der Förderrichtung abwechselnd erfolgen, während die Vakuumansaugung durch die Ansaugöffnungen (20) kontinuierlich erfolgt.

14. Verfahren nach einem der Ansprüche 11-13, **dadurch gekennzeichnet, dass** die Fördervorrichtung kleine und große Fördergeschwindigkeiten von bis zu 600 Produkten (14) pro Minute ermöglicht.

15. Verfahren nach einem der Ansprüche 11-14, **dadurch gekennzeichnet, dass** die Transferplatte (12) zur Reinigung der Saugfläche (18) und/oder des Saugraumes (40) in eine Reinigungsposition oberhalb der Saugfläche (18) bewegt wird.

## Claims

1. Unloading apparatus (10) for a product treatment device, having a transfer plate (12) for transferring a plurality of successively arranged rows comprising in each case a plurality of treated products (14) onto a conveying apparatus (16),
**characterized by**
a suction face (18), arranged between the transfer plate (12) and the conveying apparatus (16), having suction openings (20) for drawing the products onto the suction face (18), wherein the conveying directions for the products (14) on the transfer plate (12) and the conveying apparatus (16) are arranged transversely to one another.

2. Unloading apparatus (10) according to Claim 1, **characterized in that** the suction openings are arranged substantially across the entire width of the suction face (18) and the transfer plate (12) in the region of that edge of the suction face (18) that adjoins the conveying apparatus (16).

3. Unloading apparatus (10) according to one of the preceding claims, **characterized in that** at least two rows of suction openings (20) arranged in an offset manner with respect to one another are provided.

4. Unloading apparatus (10) according to one of the preceding claims, **characterized in that** the conveying plane of the conveying apparatus (16) is arranged at the same height as or up to around 0.25 mm below the suction face (18).

5. Unloading apparatus (10) according to one of the preceding claims, **characterized in that** the distance between adjacent suction openings (20) in the same row is about 1 mm to 5 mm.

6. Unloading apparatus (10) according to one of the preceding claims, **characterized in that** the diameter d of the suction openings (20) is about 3 mm to 8 mm.

7. Unloading apparatus (10) according to one of the preceding claims, **characterized in that** the suction face (18) is the surface of a suction apparatus (22) formed as an interchangeable part.

8. Unloading apparatus (10) according to Claim 7, **characterized in that** the suction apparatus has a suction chamber (40) connected to all suction openings (20), said suction chamber (40) being connectable to a vacuum pump via vacuum connections (24).

9. Unloading apparatus (10) according to one of the preceding claims, **characterized in that** the transfer plate (12) has a lifting apparatus (39) for moving the transfer plate into a cleaning position for cleaning the suction face (18) and/or the suction chamber (40).

10. Unloading apparatus (10) according to the preceding claim, **characterized in that** the lifting apparatus (39) has at least one lifting cylinder arranged beneath the transfer plate (12).

11. Method for conveying products (14) with an unloading apparatus (10) according to one of the preceding claims, **characterized in that**
a) the products (14) are conveyed in a transfer direction along the transfer plate (12) in a plurality of successively arranged rows, wherein products (14) in adjacent rows are arranged in an offset manner with respect to one another,
b) the products (14) are fed in the transfer direction via the suction face (18) to the conveying apparatus (16), which conveys the products (14) in a conveying direction transverse to the transfer direction, and
c) the products (14) of at least one entire product row are sucked onto the suction face (18) by the suction openings (20).

12. Method according to Claim 11, **characterized in that** the suction according to step c) takes place **in that** in each case only the products (14) in the frontmost product row (32) are entrained by the conveying apparatus (16), while the products in the following row (34) are retained on the suction face (18) by the suction.

13. Method according to Claim 11 or 12, **characterized in that** the forward feed of the product rows (30, 32, 34) in the conveying direction and the conveying of the respectively frontmost product row (32) in the conveying direction take place alternately, while the vacuum suction by the suction openings (20) takes place continuously.

14. Method according to one of Claims 11-13, **characterized in that** the conveying apparatus allows low and high conveying speeds of up to 600 products (14) per minute.

15. Method according to one of Claims 11-14, **characterized in that**, in order for the suction face (18) and/or the suction chamber (40) to be cleaned, the transfer plate (12) is moved into a cleaning position above the suction face (18).

## Revendications

1. Dispositif de déchargement (10) pour un dispositif de traitement de produits, comprenant une plaque de transfert (12) servant à transférer, sur un dispositif de transport (16), plusieurs rangées disposées les unes derrière les autres dotées respectivement de plusieurs produits traités (14),
**caractérisé par**
une surface d'aspiration (18) disposée entre la plaque de transfert (12) et le dispositif de transport (16) et dotée d'ouvertures d'aspiration (20) pour aspirer les produits sur la surface d'aspiration (18), les directions de transport pour les produits (14) sur la plaque de transfert (12) et le dispositif de transport (16) étant disposés transversalement les uns aux autres.

2. Dispositif de déchargement (10) selon la revendication 1, **caractérisé en ce que** les ouvertures d'aspiration sont disposées sensiblement sur toute la largeur de la surface d'aspiration (18) et de la plaque de transfert (12) dans la région du bord de la surface d'aspiration (18) adjacent au dispositif de transport (16).

3. Dispositif de déchargement (10) selon l'une des revendications précédentes, **caractérisé en ce qu'**au moins deux rangées d'ouvertures d'aspiration (20) disposées de manière décalée les unes par rapport aux autres sont prévues.

4. Dispositif de déchargement (10) selon l'une des revendications précédentes, **caractérisé en ce que** le plan de transport du dispositif de transport (16) est disposé à la même hauteur que la surface d'aspiration (18) ou jusqu'à approximativement 0,25 mm en dessous de celle-ci.

5. Dispositif de déchargement (10) selon l'une des revendications précédentes, **caractérisé en ce que** la distance entre des ouvertures d'aspiration adjacentes (20) de la même rangée est d'environ 1 mm à 5 mm.

6. Dispositif de déchargement (10) selon l'une des revendications précédentes, **caractérisé en ce que** le diamètre d des ouvertures d'aspiration (20) est d'approximativement 3 mm à 8 mm.

7. Dispositif de déchargement (10) selon l'une des revendications précédentes, **caractérisé en ce que** la surface d'aspiration (18) est la surface d'un dispositif d'aspiration (22) réalisé en tant que partie remplaçable.

8. Dispositif de déchargement (10) selon la revendication 7, **caractérisé en ce que** le dispositif d'aspiration comprend une chambre d'aspiration (40) reliée à toutes les ouvertures d'aspiration (20), laquelle peut être reliée à une pompe à vide par le biais de raccords à vide (24).

9. Dispositif de déchargement (10) selon l'une des revendications précédentes, **caractérisé en ce que** la plaque de transfert (12) comprend un dispositif de levage (39) servant à déplacer la plaque de transfert dans une position de nettoyage pour nettoyer la surface d'aspiration (18) et/ou la chambre d'aspiration (40).

10. Dispositif de déchargement (10) selon la revendication précédente, **caractérisé en ce que** le dispositif de levage (39) comprend au moins un cylindre de levage disposé en dessous de la plaque de transfert (12).

11. Procédé permettant de transporter des produits (14) à l'aide d'un dispositif de déchargement (10) selon l'une des revendications précédentes, **caractérisé en ce que**
a) les produits (14) sont transportés en plusieurs rangées disposées les unes derrière les autres dans une direction de transfert le long de la plaque de transfert (12), des produits (14) de rangées adjacentes étant disposés de manière décalée les uns par rapport aux autres,
b) les produits (14) sont acheminés le long de la direction de transfert sur la surface d'aspiration (18) du dispositif de transport (16) qui transporte les produits (14) dans une direction de transport transversale à la direction de transfert et
c) les produits (14) d'au moins toute une rangée de produits sont aspirés à l'aide des ouvertures d'aspiration (20) sur la surface d'aspiration (18).

12. Procédé selon la revendication 11, **caractérisé en ce que** l'aspiration selon l'étape c) s'effectue de telle sorte que respectivement seulement les produits (14) de la rangée de produits (32) la plus à l'avant sont entraînés par le dispositif de transport (16) tandis que les produits de la rangée (34) suivante sont retenus par l'aspiration sur la surface d'aspiration (18).

13. Procédé selon la revendication 11 ou 12, **caractérisé en ce que** l'avance des rangées de produits (30, 32, 34) le long de la direction de transport et le transport de la rangée de produits (32) respectivement la plus à l'avant le long de la direction de transport s'effectuent en alternance, tandis que l'aspiration sous vide à travers les ouvertures d'aspiration (20) s'effectue en continu.

14. Procédé selon l'une des revendications 11 à 13, **caractérisé en ce que** le dispositif de transport permet des vitesses de transport petites et grandes de jusqu'à 600 produits (14) par minute.

15. Procédé selon l'une des revendications 11 à 14, **caractérisé en ce que** la plaque de transfert (12) est déplacée dans une position de nettoyage au-dessus de la surface d'aspiration (18) pour le nettoyage de la surface d'aspiration (18) et/ou de la chambre d'aspiration (40).
